(19) Europäisches Patentamt / European Patent Office / Office européen des brevets

(11) **EP 4 765 807 A1**

(12) **EUROPEAN PATENT APPLICATION**

(43) Date of publication:
24.06.2026 Bulletin 2026/26

(21) Application number: 24307268.3

(22) Date of filing: 23.12.2024

(51) International Patent Classification (IPC):
*H04N 19/117* (2014.01)   *H04N 19/132* (2014.01)
*H04N 19/59* (2014.01)   *H04N 19/85* (2014.01)

(52) Cooperative Patent Classification (CPC):
H04N 19/85; H04N 19/117; H04N 19/132;
H04N 19/156; H04N 19/172; H04N 19/59;
H04N 19/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• LE MEUR, Olivier
  35160 TALENSAC (FR)
• DEMARTY, Claire-Helene
  35520 MONTREUIL LE GAST (FR)
• AUMONT, Franck
  35770 VERN SUR SEICHE (FR)
• BLONDE, Laurent
  35235 THORIGNE-FOUILLARD (FR)
• REINHARD, Erik
  35630 HEDE-BAZOUGES (FR)

(74) Representative: Vossius & Partner
Patentanwälte Rechtsanwälte mbB
Siebertstraße 3
81675 München (DE)

(54) **NEURAL NETWORK POST FILTER FOR RESTORING THE QOE IN AN END-TO-END ENERGY ADAPTATION CONTEXT**

(57)   In one implementation, a method of video decoding is presented, comprising: receiving at least a syntax element associated with energy adaptation; determining that one or more visual dimensions of a plurality of visual dimensions of a video are to be adjusted based on the at least a syntax element; and adapting a neural network based filter to adjust the one or more visual dimensions. At the encoder side, a method of video encoding is presented, comprising: determining that one or more visual dimensions of a plurality of visual dimensions of a video are to be adjusted for energy adaptation; and encoding at least a syntax element to indicate that the one or more visual dimensions are to be adjusted by a neural network based filter.

FIG. 5

## Description

### BACKGROUND

The present application is related to adaptation of energy consumption of the video transmission chain, encompassing encoding, decoding and rendering.

### BRIEF SUMMARY

Briefly stated, in one embodiment, a method of video decoding is presented, comprising: receiving at least a syntax element associated with energy adaptation; determining that one or more visual dimensions of a plurality of visual dimensions of a video are to be adjusted based on the at least a syntax element; and adapting a neural network based filter to adjust the one or more visual dimensions.

In another embodiment, an apparatus for video decoding is presented, comprising one or more processors and at least one memory coupled to the one or more processors, wherein the one or more processors are configured to: receive at least a syntax element associated with energy adaptation; determine that one or more visual dimensions of a plurality of visual dimensions of a video are to be adjusted based on the at least a syntax element; and adapt a neural network based filter to adjust the one or more visual dimensions.

In another embodiment, a method of video encoding is presented, comprising: determining that one or more visual dimensions of a plurality of visual dimensions of a video are to be adjusted for energy adaptation; and encoding at least a syntax element to indicate that the one or more visual dimensions are to be adjusted by a neural network based filter.

In another embodiment, an apparatus for video encoding is presented, comprising one or more processors and at least one memory coupled to the one or more processors, wherein the one or more processors are configured to: determine that one or more visual dimensions of a plurality of visual dimensions of a video are to be adjusted for energy adaptation; and encode at least a syntax element to indicate that the one or more visual dimensions are to be adjusted by a neural network based filter.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4A illustrates a method of using the quality policy when we decide to apply the postprocessing filter on all visual dimension, according to one or more embodiments of the present disclosure;

FIG. 4B illustrates a method of using the quality policy when the postfilter is limited to recovering the spatial resolution, according to one or more embodiments of the present disclosure;

FIG. 4C illustrates a method of using the quality policy when the postfilter is limited to recovering the brightness, according to one or more embodiments of the present disclosure; and

FIG. 5 illustrates a method of implementing an NNPF (Neural-Network Post-Filter) according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

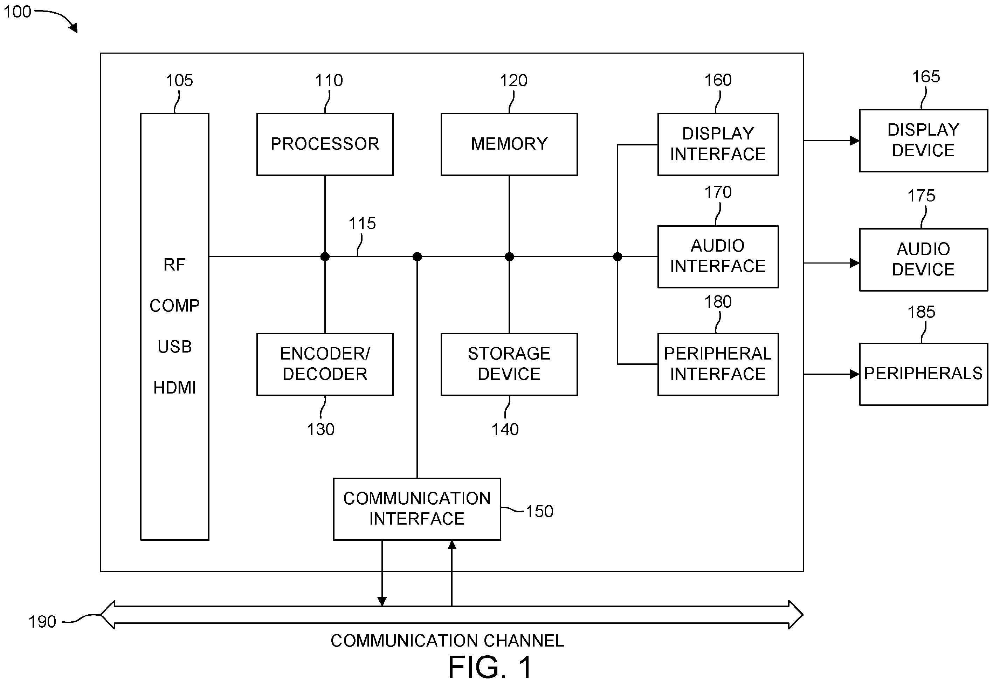

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

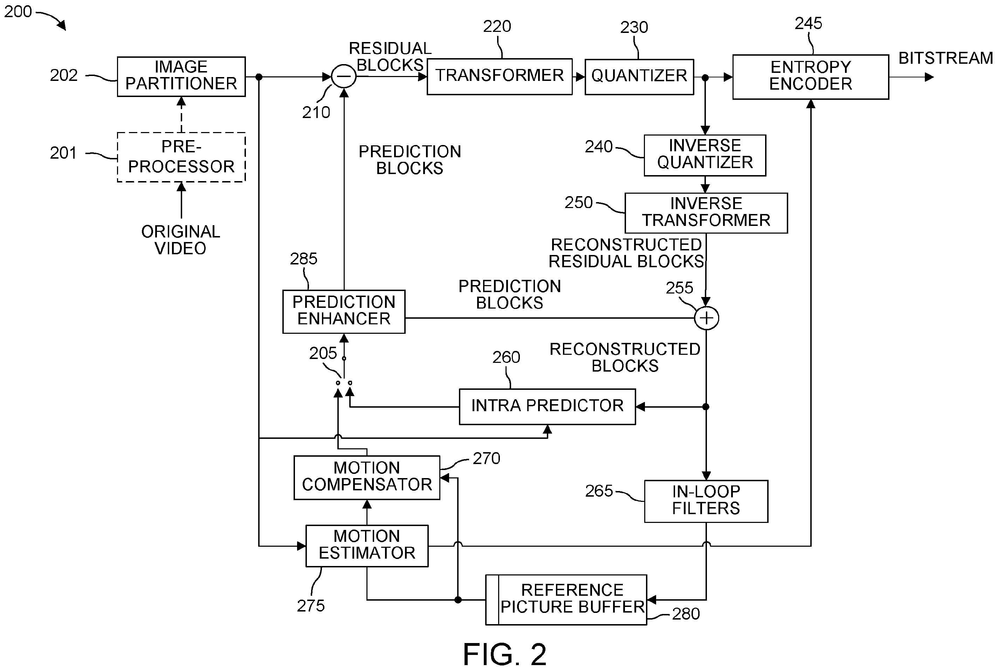

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

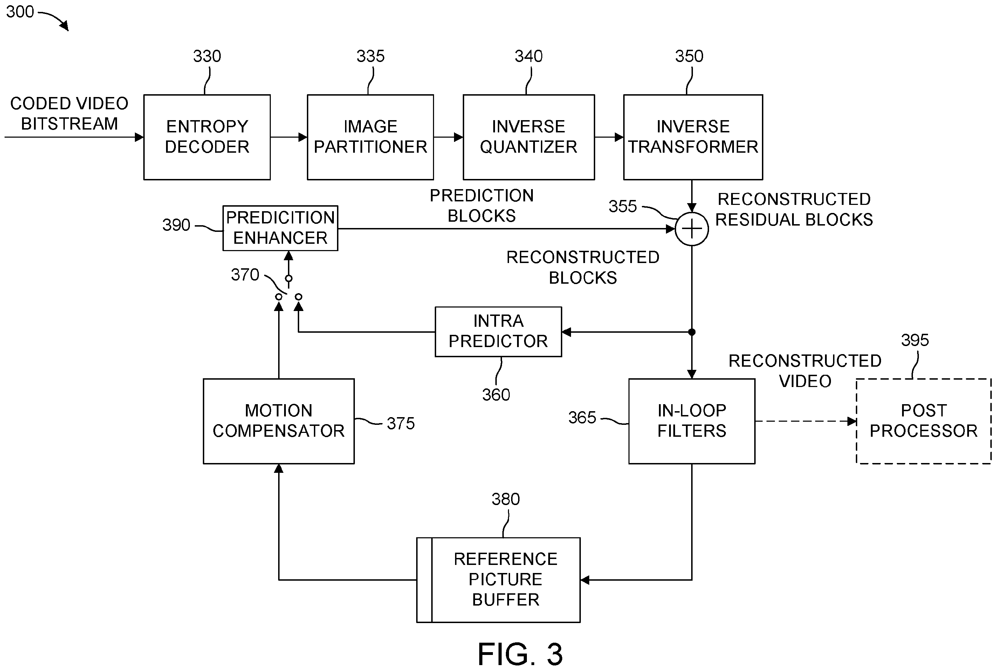

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be pre-processed by a precoding processor (201). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (395) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream. The post-decoding processor (395) can also perform post-processing filtering, for example, using a neural-network based post-filter.

**Neural network post filters**

The neural-network post-filter characteristics (NNPFC) SEI (Supplemental Enhancement Information) message specifies a neural network that may be used as a post-processing filter. In particular, the NNPFC SEI message allows an encoder to define a neural network to be used in a post-processing operation after the decoding operation. This message also specifies the input and output of the neural network and describes its complexity.

The NNPFC SEI message indicates the intended purpose of the neural network. Up to now, 8 modes have been defined:

- Enhancing visual quality
- Chroma upsampling
- Changing spatial resolution, e.g., from high-definition decoded video to ultra-high definition
- Upsampling picture rate, e.g., from 30 Hz to 60 Hz
- Upsampling bit depth to increase the dynamic range of pixel values
- Colorization to convert monochrome video to full colors.
- Temporal extrapolation
- Spatial extrapolation

These modes are also described in the following table (cf. Table 1) extracted from an article entitled "ISO/IEC 23002-7:2024/CD Amd1 Information technology - MPEG video technologies - Part 7: Versatile supplemental enhancement information messages for coded video bitstreams - Amendment 1: Additional SEI messages."

**Table 1**

| bitMask | Interpretation |
|---------|----------------|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |

By implementing neural-network filters as a post-processing step, their utilization can be introduced to some services without negatively impacting older systems that lack the ability to execute neural networks.

In the present disclosure, we propose to add a new purpose metadata in the NNPFC SEI message that indicates whether an adaptation of energy consumption has been performed at the encoder side or not. The energy consumption adaptation concerns film grain removal, spatial resolution reduction and brightness. At the decoder side, two use cases can be defined:

(i) use the incoming decoded video for lowering the energy consumption (the NNPFC SEI message indicates which processes have been used).
(ii) recover all or some visual dimensions of the decoded content, such as the grain, the brightness and the initial spatial resolution, for improving the Quality of Experience (QoE).

This new NNPFC SEI message provides the end-user an opportunity to recover a premium but energy-hungry Quality of Experience. In the context of end-to-end energy consumption reduction, this new purpose enables the end-user to recover all or some visual dimensions of the decoded energy-reduced content in order to improve the final Quality of Experience. Generally, a visual dimension is related to a specific visual property of the image, such as the color, the brightness, the resolution, the noise, and the grain, and an energy-reduced content refers to a content that requires less energy to be encoded, decoded, transmitted, rendered and/or stored.

The recovery could be the restoration of the initial resolution, the film grain restoration and the original brightness recovering. These three factors significantly influence the energy consumption of encoding, decoding and rendering, respectively. The content provider indicates in the SEI message which visual dimensions have been modified at the encoder side.

With this new NNPFC SEI message, a unique multi-task post-processing neural network-based filter (NNPF) can then be used to recover at once all or some of the aforementioned visual dimensions.

**Brightness**

Some approaches have been implemented to reduce the energy consumption of content while displayed. As displays consume the largest proportion of the energy, providing energy-aware content, i.e., that will consume less when displayed, is of significant importance, at least for OLED displays.

A commonly owned EP application No. 24305320.4 (our attorney docket number 2024PF00055) presents a type of such approach. It only concerns one visual dimension, namely the brightness.

One method to adapt the brightness of the content to reduce the energy consumption while displaying the content is described, for example, in commonly-owned EP application Nos. 22306908.9 (our attorney docket number 2022PF00508) and 23305565.6 (our attorney docket number 2023PF00367), which propose to compute a pixel-wise attenuation map that contains for each pixel the amount of reduction applied on one of the pixel components (specifically the luminance). The attenuation map is then transmitted to the decoder and applied to the decoded image, at the display side (i.e., before rendering the image on the display). These techniques match the goal of producing some energy-reduced content. However, the encoding / transmission / decoding of the attenuation maps makes this system complex to deploy. Furthermore, in these approaches it is proposed to reduce the energy consumption by modifying one visual dimension, i.e., the brightness.

**Encoding and decoding**

Reducing the energy consumption of the encoder and decoder is also of great importance. One straightforward method to reach this objective is to manipulate the complexity and the resolution of the content. Downscaling the content before encoding and upscaling it after decoding while preserving the same quality of experience is one straightforward solution to reduce the computational burden. Additionally, removing and modeling artistic noise, such as film grain, before encoding and synthesizing it after decoding, not only reduces encoding and decoding times, but also significantly reduces the bitrate, while still preserving the artistic intent at the user side.

Most existing methods consider only one visual dimension, and require a dedicated method for removing the grain, adapting the brightness or reducing the spatial resolution. However, 3R-INN (Removing grain, Reducing the spatial resolution, Reducing the brightness) (see a commonly owned EP application No. 23306984.8, our attorney docket number 2023PF01009, hereinafter "3R-INN") allows to modify several visual dimensions of the input content at once, and thus providing some energy reduction at different steps of the video chain.

As described above, in the context of NNPFC SEI message, several individual purposes are proposed, each of them corresponding to one specific task, e.g., spatial extrapolation, colourization, etc. In addition, one NNPF is usually trained for one specific purpose. We aim to overcome these limitations by proposing a new NNPF purpose and its corresponding NNPF filter able to tackle several purposes at once. In addition, none of the existing purposes of NNPFC is related to energy adaptation operations.

In the present disclosure, we propose to add a new purpose metadata in the NNPFC SEI message that indicates the end-to-end adaptation of energy consumption that is performed. The following use cases can be considered.

At the encoder side, the input content is modified prior the encoding, for example, by the streaming providers. The modifications aim to reduce the energy consumption of the encoding, the transmission, the decoding and the rendering. Modifications of several visual dimensions, for example, film grain removal, spatial resolution downsampling and brightness reduction, can be performed at the same time. At the decoder side, an NNPF filter can be applied to recover those visual dimensions in order to recover the original visual quality or a quality close to the original one. The purpose of this NNPF is then to recover the Quality of Experience, when the content has been preprocessed for reducing the energy consumption.

**Syntax description**

We propose to extend the purpose of the NNPF with a new mode dedicated to end-to-end energy adaptation. The proposed modification and the associated semantics are detailed below.

**Table 2**

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | QoE adaptation ((i.e., recovering the initial QoE by e.g., recovering film grain, recovering the spatial resolution, recovering the brightness)). |

Note that the **bitMask** value is given as an example and another bitmask value could be used.

Then, the value of **nnpfc_purpose** shall be in the range of 0 to 511, inclusive, in bitstreams conforming to this edition of this document. Values of 512 to 65 535, inclusive, for **nnpfc_purpose** are reserved for future use by ITU-T | ISO/IEC and shall not be present in bitstreams conforming to this edition of this document.

The SEI message syntax is modified as followed (underlined). These modifications allow to set up correctly the NNPF filter.

Table 3

| nn_post_filter_characteristics( payloadSize ) { | Descriptor |
|---|---|
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1 ) { | |
| while( !byte_aligned( ) ) | |
| **nnpfc_alignment_zero_bit_a** | u(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| /* input and output formatting */ | |
| **nnpfc_num_input_pics_minus 1** | ue(v) |
| if( nnpfc_num_input_pics_minus1 > 0 ) { | |
| for( i = 0; i <= nnpfc_num_input_pics_minus1; i++ ) | |
| **nnpfc_input_pic_filtering_flag**[ i ] | u(1) |
| **nnpfc absent input_pic zero flag** | u(1) |
| } | |
| if( ChromaUpsamplingFlag ) | |
| **nnpfc_out_sub_c_flag** | u(1) |
| if( ColourizationFlag ) | |
| **nnpfc_out_colour_format_idc** | u(2) |
| if( ResolutionResamplingFlag ) { | |
| **nnpfc_pic_width_num_minus1** | ue(v) |
| **nnpfc_pic_width_denom_minus1** | ue(v) |
| **nnpfc_pic_height_num_minus 1** | ue(v) |
| **nnpfc_pic_height_denom_minus1** | ue(v) |
| } | |
| if( QoEFlag ){ | |
| **nnpfc_energy_reduced_content_flags** | <u>u(3)</u> |
| if (nnpfc_energy_reduced content flags & 0x04 ) { | |
| **nnpfc width** | <u>ue(v)</u> |
| **nnpfc height** | <u>ue(v)</u> |
| Σ | |
| if (nnpfc_energy_reduced_content_flags & 0x01) { | |
| **nnpfc brightness modification val** | <u>u(5)</u> |
| <u>}</u> | |
| <u>}</u> | |

8

| | |
|---|---|
| if( PictureRateUpsamplingFlag ) | |
| for( i = 0; i < nnpfc_num_input_pics_minus1; i++ ) | |
| nnpfc_interpolated_pics[ i ] | ue(v) |
| **nnpfc_component_last_flag** | u(1) |
| **nnpfc_inp_format_idc** | ue(v) |
| **nnpfc_auxiliary_inp_idc** | ue(v) |
| **nnpfc_inp_order_idc** | ue(v) |
| if( nnpfc_inp_format_idc = = 1 ) { | |
| if( nnpfc_inp_order_idc != 1 ) | |
| **nnpfc_inp_tensor_luma_bitdepth_minus8** | ue(v) |
| if( nnpfc_inp_order_idc > 0 ) | |
| **nnpfc_inp_tensor_chroma_bitdepth_minus8** | ue(v) |
| **}** | |
| **nnpfc_out_format_idc** | ue(v) |
| **nnpfc_out_order_idc** | ue(v) |
| if( nnpfc_out_format_idc = = 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc separate colour description_present flag** | u(1) |
| if( nnpfc_separate_colour_description_present_flag ) { | |
| **nnpfc colour_primaries** | u(8) |
| **nnpfc_transfer_characteristics** | u(8) |
| if( nnpfc_out_format_idc = = 1 ) { | |
| **nnpfc_matrix_coeffs** | u(8) |
| **nnpfc_full_range_flag** | u(1) |
| } | |
| } | |
| if( nnpfc_out_order_idc > 0 ) | |
| **nnpfc chroma loc info_present flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc constant_patch size flag** | u(1) |
| if( nnpfc_constant_patch_size_flag ) { | |
| **nnpfc_patch_width_minus 1** | ue(v) |
| **nnpfc_patch_height_minus 1** | ue(v) |
| } else { | |

(continued)

| | |
|---|---|
| **nnpfc_extended_patch_width_cd_delta_minus1** | ue(v) |
| **nnpfc_extended_patch_height_cd_delta_minus1** | ue(v) |
| } | |
| **nnpfc_padding_type** | ue(v) |
| if( nnpfc_padding_type = = 4 ) { | |
| if( nnpfc_inp_order_idc != 1 ) | |
| **nnpfc_luma_padding_val** | ue(v) |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc complexity_info_present flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | u(1) |
| for( i = 0; more_data_in_payload( ); i++ ) | |
| **nnpfc_payload_byte[ i ]** | b(8) |
| } | |
| } | |

The variables ChromaUpsamplingFlag, ResolutionResamplingFlag, PictureRateUpsamplingFlag, BitDepthUpsamplingFlag, ColourizationFlag, TemporalExtrapolationFlag, SpatialExtrapolationFlag, and QoEFlag, specifying whether nnpfc_purpose indicates the purpose of the NNPF to include chroma upsampling, resolution resampling, picture rate upsampling, bit depth upsampling, colourization, temporal extrapolation, and energy adaptation respectively, are derived as follows:

$$ChromaUpsamplingFlag = ( ( nnpfc\_purpose \& 0x02 ) > 0 ) ? 1 : 0$$

$$ResolutionResamplingFlag = ( ( nnpfc\_purpose \& 0x04 ) > 0 ) ? 1 : 0$$

$$PictureRateUpsamplingFlag = ( ( nnpfc\_purpose \& 0x08 ) > 0 ) ? 1 : 0 \tag{1}$$

$$BitDepthUpsamplingFlag = ( ( nnpfc\_purpose \& 0x10 ) > 0 ) ? 1 : 0$$

$$ColourizationFlag = ( ( nnpfc\_purpose \& 0x20 ) > 0 ) ? 1 : 0$$

$$TemporalExtrapolationFlag = ( ( nnpfc\_purpose \& 0x40 ) > 0 ) ? 1 : 0$$

$$SpatialExtrapolationFlag = ( ( nnpfc\_purpose \& 0x80 ) > 0 ) ? 1 : 0$$

$$QoEFlag = ( ( nnpfc\_purpose \& 0x100 ) > 0 ) ? 1 : 0$$

**nnpfc energy_reduced content flags,** when QoEFlag is equal to 1, is a bitfield indicating which modification the content encountered at the encoder to reduce its energy consumption in the video chain. The bitfield is defined over 3 bits.

- If (nnpfc_energy_reduced_content_flags & 0x01 > 0) ? 1:0 == 1, it indicates that the brightness of the content has been modified to reduce the energy consumption during the rendering.
- If (nnpfc_energy_reduced_content_flags & 0x02 > 0) ? 1:0 == 1, it indicates that the film grain of the content has been removed to reduce the energy consumption during the encoding process and the transmission.
- If (nnpfc_energy_reduced_content_flags & 0x04 > 0) ? 1:0 == 1, it indicates that the spatial resolution has been modified to reduce the energy consumption at the encoder and decoder sides and the transmission.

**nnpfc_width** and **nnpfc_height,** when nnpfc_energy_reduced_content_flags & 0x04 == 1, specify the original width and height of the original content, respectively.
**nnpfc_brightness_modification_val,** when nnpfc_energy_reduced_content_flags & 0x01 == 1, specifies the amount of brightness decrease that has been performed at the encoder side. This value is coded over 5 bits (0 to 31) and should be in expressed in percentage as follow:

$$percentage\_of\_modification = 100 / 2^5 * nnpfc\_brightness\_modification\_val$$

Examples:

- nnpfc_brightness_modification_val = 1, the percentage_of_modification value is 3.125%
- nnpfc_brightness_modification_val = 10, the percentage_of_modification value is 31.25%
- nnpfc_brightness_modification_val = 20, the percentage_of_modification value is 62.5%

In another embodiment, the **nnpfc_brightness_modification_val** semantic could be given by the following one (coded over 2 bits):

| nnpfc_brightness_modification_val | Interpretation |
|---|---|
| 0 | The brightness is reduced by 5% |
| 1 | The brightness is reduced by 10% |
| 2 | The brightness is reduced by 20% |
| 3 | The brightness is reduced by 30% |

In another embodiment, the **nnpfc_brightness_modification_val** semantic directly encodes on 7 bits with the value between 0 and 99. The brightness reduction is therefore **nnpfc_brightness_modification_val** + 1.
In some cases, the NNPF requires more information, such as on which components it should perform the process, the type of targeted display, and the expected quality.

**Display model**

**nnpfc display_model** is a bit field mask which indicates the display models for which the brightness has been adapted.

**Table 3**

| Bit number | Display model |
|:---:|:---|
| 0 | Transmissive pixel |
| 1 | Emissive pixel |
| 2..3 | Reserved for future types |

For example, nnpfc_display_type_field = $11_2$ means that the NNPF can be used for both "Transmissive pixel" and "Emissive pixel" display models.

**Expected quality**

If the client has a quality policy, for instance the quality cannot be lower than a given threshold (a target quality level), the expected quality can help the client take the decision about whether to apply or not the post filter. Several syntax elements can be defined as follows.

**nnpfc expected overall_quality** specifies the quality of the displayed video after applying the neural network post filter. Examples of metrics are PSNR (Peak Signal-to-Noise Ratio), V-MAF (Video Multi-Method Assessment Fusion) or SSIM (Structural Similarity Index Measure) values for the modified picture after applying the neural network post filter as specified in Table 4. This parameter can be expressed as an absolute value or as a percentage value of reduction or increase of quality according to a selected quality metric in comparison with its nominal value.

**nnpfc_expected_grain_quality** specifies the quality of the displayed video after applying the neural network post filter to recover the film grain only. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_expected brightness_quality** specifies the quality of the displayed video after applying the neural network post filter to recover the brightness only. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_expected_spatialresolution_quality** specifies the quality of the displayed video after applying the neural network post filter to recover the spatial resolution only. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_expected_grain_brightness_quality** specifies the quality of the displayed video after applying the neural network post filter to recover the grain and the brightness. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_expected_grain_spatialresolution_quality** specifies the quality of the displayed video after applying the neural network post filter to recover the grain and the spatial resolution. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_expected_brightness_spatialresolution_quality** specifies the quality of the displayed video after applying the neural network post filter to recover the brightness and the spatial resolution. Examples of metrics are PSNR, V-MAF or SSIM values for the modified picture after applying the neural network post filter as specified in Table 4. This parameter can be expressed as an absolute value or as a percentage value of reduction or increase of quality according to a selected quality metric in comparison with its nominal value.

**nnpfc_video_quality_metric** indicates the quality metric to be considered when the NNPF is applied.

**Table 4**

| nnpfc_video_quality_metric | Metric name |
|---|---|
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

In one embodiment, the syntax is given by:

| | |
|---|---|
| ... | |
| if( QoEFlag ) { | |
| **nnpfc energy_reduced content fiags** | u(3) |
| if **(nnpfc_energy_reduced_content_flags & 0x07 != 0) {** | |
| if (nnpfc_energy_reduced_content_flags & 0x04) { | |
| **nnpfc_width** | ue(v) |
| **nnpfc_height** | ue(v) |
| **nnpfc_expected_spatialresolution_quality** | u(8) |
| } | |
| if (nnpfc_energy_reduced_content_flags & 0x01) { | |
| **nnpfc_brightness_modification_val** | u(5) |
| **nnpfc_expected_brightness_quality** | u(8) |
| **nnpfc_display_model** | u(4) |
| } | |
| if (nnpfc_energy_reduced_content_flags & 0x02) { | |
| **nnpfc_expected_grain_quality** | u(8) |
| } | |
| if (nnpfc_energy_reduced_content_flags & 0x03) { | |
| **nnpfc_expected_grain_brightness_quality** | u(8) |
| } | |
| if (nnpfc_energy_reduced_content_flags & 0x06) { | |
| **nnpfc_expected_grain_spatialresolution_quality** | u(8) |
| } | |
| if (nnpfc_energy_reduced_content_flags & 0x05) { | |
| **nnpfc_expected_brightness_spatialresolution_quality** | u(8) |
| } | |
| | |
| **nnpfc expected overall_quality** | u(8) |
| **nnpfc_video_quality_metric** | u(8) |
| } | |
| } | |

(continued)

| ... | |
|---|---|

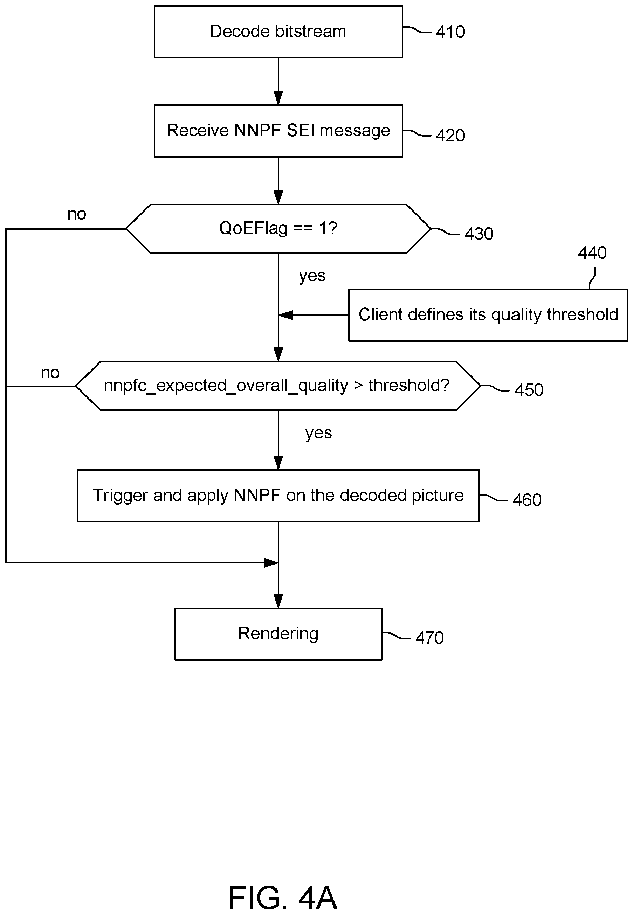

FIG. 4A illustrates a method of using the quality policy when we decide to apply the postprocessing filter on all visual dimension (nnpfc_energy_reduced_content_flags == 0x07), according to an embodiment. As shown in FIG. 4A, the client decodes (410) the bitstream and receives (420) the NNPF SEI message, if any. If the QoEFlag is true (430), it indicates that the decoded video can be postprocessed to enhance its visual quality. The client can check (440) the expected visual quality after the use of the postfilter when recovering all visual dimensions. If the expected visual quality is above a quality threshold defined by the client (450), the postfilter process is triggered (460) to recover all visual dimensions before rendering (470). If not, the client does not allow the postprocessing operation.

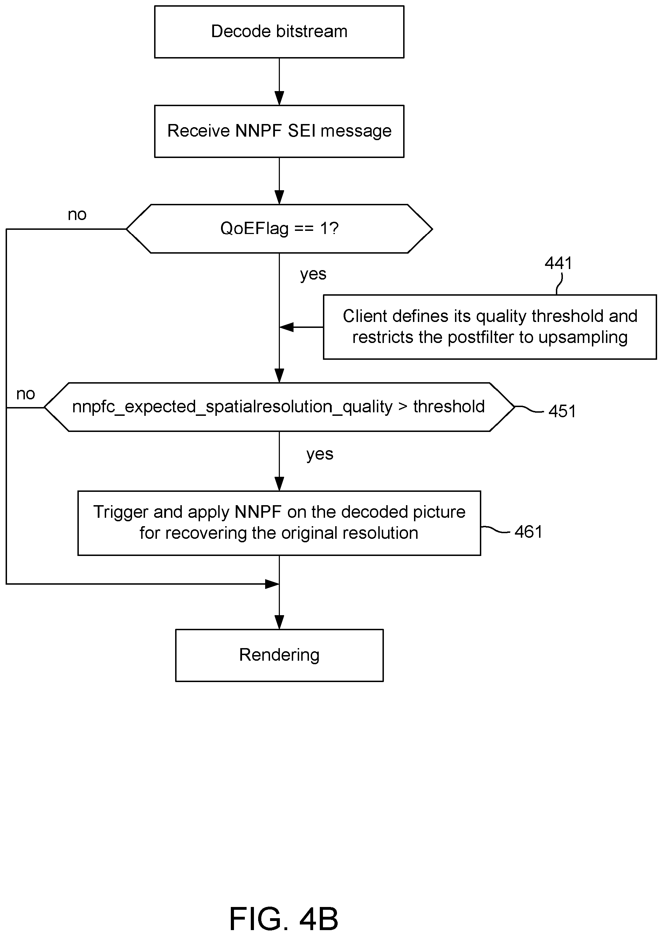

FIG. 4B illustrates a method of using the quality policy when the postfilter is limited to recovering the spatial resolution (nnpfc_energy_reduced_content_flags == 0x04), according to an embodiment. The client can check (441) the expected visual quality after the use of the postfilter when recovering only the spatial resolution. If the expected visual quality is above a quality threshold defined by the client (451), the postfilter process is triggered (461) to recover the spatial resolution. If not, the client does not allow the postprocessing operation.

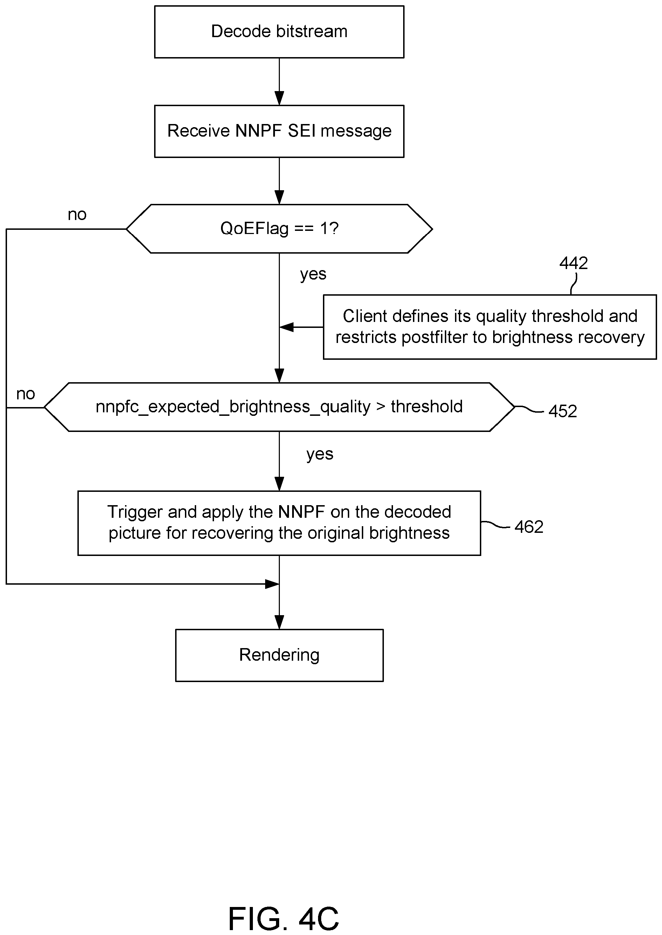

FIG. 4C illustrates a method of using the quality policy when the postfilter is limited to recovering the brightness (nnpfc_energy_reduced_content_flags == 0x01), according to an embodiment. The client can check (442) the expected visual quality after the use of the postfilter when recovering only the brightness. If the expected visual quality is above a quality threshold defined by the client (452), the postfilter process is triggered (462) to recover the brightness. If not, the client does not allow the postprocessing operation.

In the above, we provided three examples. However, there are different variants and combination associated with the three visual dimensions used in these examples (brightness, spatial resolution, film grain).

At the encoder side, prior to the encoding, the energy-reduced picture can be processed to retrieve the original visual dimensions. For all cases, i.e., restoring the brightness, restoring the spatial resolution, restoring the film grain, restoring the brightness and the spatial resolution, restoring the brightness and the film grain, restoring the spatial resolution and the film grain, the visual quality is evaluated according to a given quality metric specified in nnpfc video_quality_metric. Quality values are used to populate information such as nnpfc_expected_spatialresolution_quality, nnpfc_expected_brightness_quality.

**Different inputs and outputs of the NNPF**

Depending on the type of the specified filter, the neural network post filter can process the YUV components or the RGB components. In this case, the flag **nnpfc_separate_colour_description_present_flag** enables to specify the color transformation. In a particular embodiment, the input post filter is YUV and the output is also YUV.

Several strategies can be defined:

- The post filter only modifies the Y component, and U and V components are not changed. Note that if the Y component has been rescaled, U and V components have to be rescaled accordingly.
- The post filter computes the new Y component from the incoming Y component. However, the RGB values of the input image are modified by multiplying the RGB components by the ratio of the luminance. In this context, two color transformations are made: YUV to RGB, and the modified RGB to YUV.

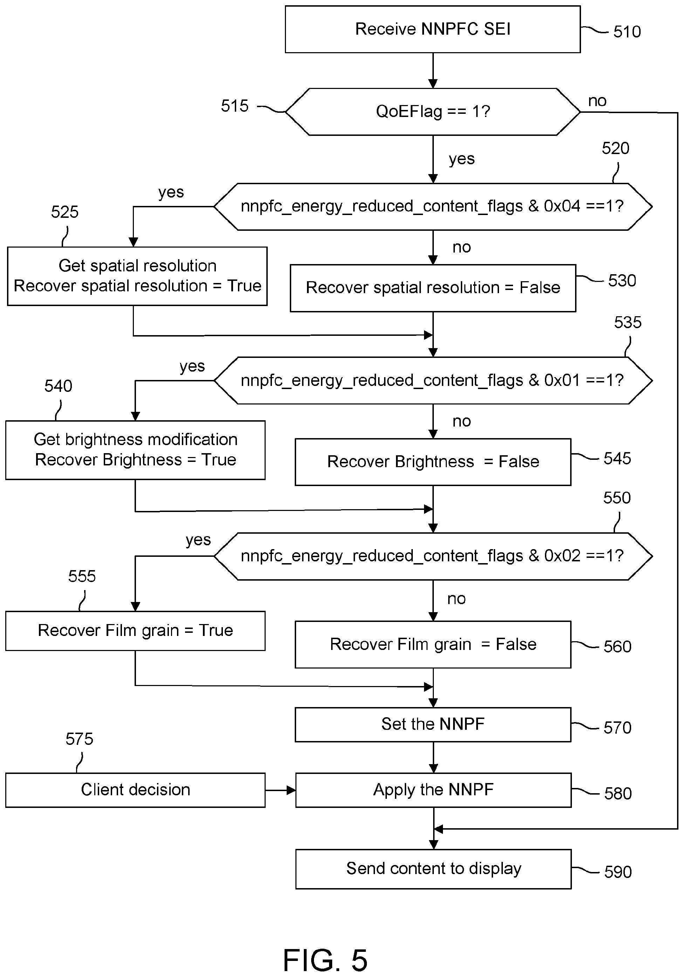

FIG. 5 illustrates a method of using the proposed NNPF filter, according to an embodiment. The proposed SEI NNPFC message is defined at the encoder side, according to the processes that have been applied to the content. Such prior information, called metadata, are inserted in the proposed SEI message. The encoded energy-reduced picture and the SEI message are then inserted in the bitstream.

At step 510, the SEI NNPFC message is decoded. At step 515, the decoder checks whether the QoEFlag is activated or not. If it is not activated, the content is sent to the display (590) or to some other processing without modification. If the QoEFlag is activated, then the potential brightness ratio and the potential new resolution values are recovered if the appropriate bits in nnpfc_energy_reduced_content_flags are enabled, and the NNPF corresponding to the QoEFlag and appropriate parameters are applied on the content depending on the client decision, before sending it to the display (590) or to some other processings.

In particular, the decoder checks (520) whether nnpfc_energy_reduced_content_flags & 0x04 ==1. If yes, then the spatial resolution is obtained and the recover spatial resolution flag is set to true (525); otherwise, the recovery spatial resolution flag is set to false (530). The decoder also checks (535) whether nnpfc_energy_reduced_content_flags & 0x01 ==1. If yes, then the brightness modification parameter is obtained and the recover brightness flag is set to true (540); otherwise, the recovery brightness flag is set to false (545). The decoder further checks (550) whether nnpfc_energy_reduced_content_flags & 0x02 ==1. If yes, then the recover film grain flag is set to true (555); otherwise, the recovery film grain flag is set to false (560). Based on the above parameters, the NNPF is configured (570). Then the NNPF is applied (580) based on the client decision (575), for example, as illustrated in FIGs. 4A-4C. The filtered content is then sent to display (590).

In a particular implementation of the NNPF, the neural post filter can be the network 3R-INN. 3R-INN is an invertible neural network that has been trained for three different tasks: reducing the spatial resolution, removing the film grain and reducing the brightness. In a forward pass, the 3R-INN can process all the aforementioned visual dimensions and then outputs an energy-reduced content. In the backward pass, the 3R-INN can recovere one, two or three aforementioned visual dimensions. For that purpose, the 3R-INN requires two inputs: the energy-reduced content that will be re-processed and a latent vector indicating which visual dimensions the network should recovered. In other implementations, filters other than 3R-INN can be used.

In the above, three visual dimensions (brightness, film grain, spatial resolution) are considered in the context of energy adaptation. However, the present methods can be applied when different visual dimensions or more visual dimensions are considered.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the pre-processor and post-processor described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

  i. Encoding, into coded video data, syntax elements that can enable the decoder to decode the coded video data, according to any of the embodiments described herein.
  ii. A bitstream that includes one or more of the described syntax elements, or variations thereof, whether transmitted, stored, or otherwise made available.
  iii. Creating, transmitting, receiving, and/or decoding of the bitstream.
  iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method of video decoding, comprising:

receiving at least a syntax element associated with energy adaptation;
determining that one or more visual dimensions of a plurality of visual dimensions of a video are to be adjusted based on the at least a syntax element; and
adapting a neural network based filter to adjust the one or more visual dimensions.

2. An apparatus for video decoding, comprising one or more processors and at least one memory coupled to the one or more processors, wherein the one or more processors are configured to:

receive at least a syntax element associated with energy adaptation;
determine that one or more visual dimensions of a plurality of visual dimensions of a video are to be adjusted based on the at least a syntax element; and
adapt a neural network based filter to adjust the one or more visual dimensions.

3. The method of claim 1, further comprising, or the apparatus of claim 2, wherein the one or more processors are further configured to perform:
decoding parameters for adjusting the one or more visual dimensions.

4. The method of claim 3, or the apparatus of claim 3, wherein the parameters include at least one of a spatial resolution of an original content corresponding to the video, a brightness modification parameter, and a display model.

5. The method of claim 1, 3 or 4, further comprising, or the apparatus of any one of claims 2-4, wherein the one or more processors are further configured to perform:
determining that visual dimensions of the plurality of visual dimensions other than the one or more visual dimensions are not to be adjusted based on the at least a syntax element.

6. The method of any one of claims 1 and 3-5, or the apparatus of any one of claims 2-5, wherein the one or more visual dimensions correspond to one or more of spatial resolution, brightness and film grain.

7. The method of any one of claims 1 and 3-6, or the apparatus of any one of claims 2-6, wherein the neural network based filter corresponds to a 3R-INN.

8. The method of any one of claims 1 and 3-7, or the apparatus of any one of claims 2-7, wherein a single syntax element indicates whether each of the plurality of visual dimensions is to be adjusted or not.

9. The method of any one of claims 1 and 3-8, further comprising, or the apparatus of any one of claims 2-8, wherein the one or more processors are further configured to perform:

obtaining a second syntax element indicative of an expected quality level when the one or more visual dimensions are to be adjusted;
obtaining a target quality level associated with the one or more visual dimensions; and
determining that the neural network based filter is to adjust the one or more visual dimensions responsive to that the expected quality level exceeds the target quality level.

10. The method of claim 9, or the apparatus of claim 9, wherein the target quality level is set by a client.

11. A method of video encoding, comprising:

determining that one or more visual dimensions of a plurality of visual dimensions of a video are to be adjusted for energy adaptation; and
encoding at least a syntax element to indicate that the one or more visual dimensions are to be adjusted by a neural network based filter.

12. An apparatus for video encoding, comprising one or more processors and at least one memory coupled to the one or more processors, wherein the one or more processors are configured to:

determine that one or more visual dimensions of a plurality of visual dimensions of a video are to be adjusted for energy adaptation; and
encode at least a syntax element to indicate that the one or more visual dimensions are to be adjusted by a neural network based filter.

**13.** The method of claim 11, further comprising, or the apparatus of claim 12, wherein the one or more processors are further configured to perform:
encoding parameters for adjusting the one or more visual dimensions.

**14.** The method of claim 13, or the apparatus of claim 13, wherein the parameters include at least one of a spatial resolution of an original content corresponding to the video, a brightness modification parameter, and a display model.

**15.** The method of any one of claims 11, 13 and 14, or the apparatus of any one of claims 12-14, wherein a single syntax element indicates whether each of the plurality of visual dimensions is to be adjusted or not.

FIG. 1

EP 4 765 807 A1

FIG. 2

EP 4 765 807 A1

FIG. 3

```
┌─────────────────────────────────┐
│        Decode bitstream         │─── 410
└─────────────────────────────────┘
                 │
                 ▼
┌─────────────────────────────────┐
│     Receive NNPF SEI message    │─── 420
└─────────────────────────────────┘
                 │
                 ▼
    no      ╱─────────────────────╲
◄───────────       QoEFlag == 1?    ╲─── 430
           ╲─────────────────────╱
                 │ yes
                 │              ┌──────────────────────────────────┐
                 │              │  Client defines its quality      │─── 440
                 ▼              │  threshold                       │
                 ◄──────────────└──────────────────────────────────┘
    no      ╱─────────────────────────────────────────╲
◄───────────  nnpfc_expected_overall_quality > threshold? ╲─── 450
           ╲─────────────────────────────────────────╱
                 │ yes
                 ▼
┌─────────────────────────────────────────┐
│ Trigger and apply NNPF on the decoded   │─── 460
│ picture                                 │
└─────────────────────────────────────────┘
                 │
                 ▼
┌─────────────────────────────────┐
│           Rendering             │─── 470
└─────────────────────────────────┘
```

# FIG. 4A

FIG. 4B

Decode bitstream

Receive NNPF SEI message

QoEFlag == 1? — no

yes

Client defines its quality threshold and restricts postfilter to brightness recovery — 442

nnpfc_expected_brightness_quality > threshold — no — 452

yes

Trigger and apply the NNPF on the decoded picture for recovering the original brightness — 462

Rendering

FIG. 4C

24

FIG. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "AHG9: On NNPF for brightness adaptation", 36. JVET MEETING; 20241101 - 20241108; KEMER; (THE JOINT VIDEO EXPLORATION TEAM OF ISO/IEC JTC1/SC29/WG11 AND ITU-T SG.16), , no. JVET-AJ0147 23 October 2024 (2024-10-23), XP030326014, Retrieved from the Internet: URL:https://jvet-experts.org/doc_end_user/ documents/36_Kemer/wg11/JVET-AJ0147-v1.zip JVET-AJ0147-v1.docx [retrieved on 2024-10-23] | 1-6, 11-14 | INV. H04N19/117 H04N19/132 H04N19/59 H04N19/85 |
| Y | * abstract * * section 1 Introduction * * section 2 Experiments * * section 3 Proposal: option #1 * * figure 1 * | 7-10,15 | |
| | ----- | | |
| | -/-- | | TECHNICAL FIELDS SEARCHED (IPC) |
| | | | H04N |

The present search report has been drawn up for all claims

| Place of search | Date of completion of the search | Examiner |
|---|---|---|
| The Hague | 2 June 2025 | Hampson, Frances |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................
& : member of the same patent family, corresponding
document

EPO FORM 1503 03.82 (P04C01)

| | Europäisches Patentamt<br>European Patent Office<br>Office européen des brevets | **EUROPEAN SEARCH REPORT** | **Application Number**<br>EP 24 30 7268 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C-H DEMARTY (INTERDIGITAL) ET AL: "[AHG9]: Neural network post-filter for recovering images from energy-aware images", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0126 ; m67196 11 April 2024 (2024-04-11), XP030317429, Retrieved from the Internet: URL:https://jvet-experts.org/doc_end_user/ documents/34_Rennes/wg11/JVET-AH0126-v1.zi p JVET-AH0126-v1.docx [retrieved on 2024-04-11] * abstract * * section 1 Introduction * * section 2 Proposal * * figure 1 * | 1,2,11, 12 | |
| Y | AMEUR ZOUBIDA ET AL: "3R-INN: How to be climate friendly while consuming/delivering videos?", ARXIV, vol. v1, 18 March 2024 (2024-03-18), pages 1-10, XP093194581, 201 Olin Library Cornell University Ithaca, NY 14853 DOI: 10.48550/arxiv.2403.11760 Retrieved from the Internet: URL:https://arxiv.org/pdf/2403.11760> * abstract * * Section 2 Related work * * figure 1 * | 7-10,15 | TECHNICAL FIELDS SEARCHED (IPC) |

The present search report has been drawn up for all claims

| Place of search | Date of completion of the search | Examiner |
|---|---|---|
| The Hague | 2 June 2025 | Hampson, Frances |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- EP 24305320
- EP 22306908

- EP 23306984